Europäisches Patentamt

European Patent Office

Office européen des brevets

(11) Veröffentlichungsnummer: **0 335 009**

**A2**

(12) **EUROPÄISCHE PATENTANMELDUNG**

(21) Anmeldenummer: **88121654.3**

(22) Anmeldetag: **24.12.88**

(51) Int. Cl.⁴: **G01S 13/92 , G01S 13/58 , G01S 7/00 , G01S 7/40**

(30) Priorität: **26.03.88 DE 3810357**

(43) Veröffentlichungstag der Anmeldung:
**04.10.89 Patentblatt 89/40**

(84) Benannte Vertragsstaaten:
**AT BE CH DE ES FR GB IT LI LU NL SE**

(71) Anmelder: **Licentia Patent-Verwaltungs-GmbH**
**Theodor-Stern-Kai 1**
**D-6000 Frankfurt/Main 70(DE)**

(72) Erfinder: **Stammler, Walter, Dr.**
**Mozartstrasse 18**
**D-7900 Ulm(DE)**

(74) Vertreter: **Schulze, Harald Rudolf, Dipl.-Ing. et al**
**Licentia Patent-Verwaltungs-GmbH**
**Theodor-Stern-Kai 1**
**D-6000 Frankfurt/Main 70(DE)**

(54) Verfahren zur lokalen Verkehrsdatenerfassung und -auswertung und Vorrichtung zum Durchführen des Verfahrens.

(57) Die Erfindung betrifft ein Verfahren zur lokalen Verkehrsdatenerfassung und -auswertung auf der Grundlage einer Echtzeitauswertung von Dopplerechos auf digitaler Basis, wobei zunächst das Frequenzspektrum der Dopplerechos gebildet wird, anschließend in diesem Spektrum die Frequenz mit maximaler Amplitude bestimmt wird und aus dieser Frequenz die Geschwindigkeit des registrierten Fahrzeugs und aus der Fahrzeuggeschwindigkeit und der Dopplerecho-Signaldauer die Fahrzeuglänge bestimmt wird. Außerdem wird eine vorteilhafte Vorrichtung zum Ausführen des Verfahrens beschrieben, bestehend aus Millimeterwellen-Radarsensor, Übertragungseinheit und Auswerteeinheit mit digitaler Signalverarbeitung.

FIG. 2

EP 0 335 009 A2

## Verfahren zur lokalen Verkehrsdatenerfassung und -auswertung und Vorrichtung zum Durchführen des Verfahrens

Die Erdindung betrifft ein Verfahren zur lokalen Verkehrsdatenerfassung und -auswertung gemäß Oberbegriff des Patentanspruchs 1 sowie eine Vorrichtung zum Durchführen des Verfahrens.

Verfahren bzw. Vorrichtungen dieser Art werden beispielsweise zur Überwachung bzw. Steuerung oder statistischen Erfassung des Verkehrsflusses auf Autobahnen, Überlandstraßen und/oder im innerstädtischen Bereich eingesetzt. Möglich ist auch ihr Einsatz im Bereich des spurgebundenen Verkehrs, beispielsweise für Eisenbahnen, oder in der automatisierten Lagerhaltung oder im Bereich der industriellen Fertigung, beispielsweise zur Überwachung und Steuerung von automatisierten Fertigungsstraßen.

Die Aufgabe der Erfindung besteht darin, ein Verfahren der eingangs genannten Art zu schaffen, mit dem eine möglichst genaue und schnelle Verkehrsdatenerfassung und -auswertung möglich ist.

Die erfindungsgemäße Lösung der Aufgabe ist im Patentanspruch 1 beschreiben. In den übrigen Ansprüchen sind vorteilhafte Aus- und Weiterbildungen des erfindungsgemäßen Verfahrens (Ansprüche 2 -18) bzw. der bevorzugten Vorrichtung zum Ausführen des Verfahrens (Ansprüche 19 - 28) sowie bevorzugte Anwendungen (Ansprüche 29 - 30) beschrieben.

Im folgenden wird die Erfindung anhand der Figuren am Beispiel eines überregionalen Systems zur Überwachung bzw. Steuerung des Verkehrsflusses im Straßenverkehr, insbesondere auf Autobahnen, näher erläutert. Es zeigen

FIG. 1 ein Übersichtsbild eines solchen überregionalen Systems zur Überwachung bzw. Steuerung des Verkehrsflusses auf Autobahnen.

FIG. 2 ein Übersichtsbild einer vorteilhaften Ausführungsform der erfindungsgemäßen Vorrichtung zum Ausführen des erfindungsgemäßen Verfahrens, bei der mehrere erfindungsgemäße Vorrichtungen gleicher Art miteinander kombiniert sind.

FIG. 3 ein detaillierteres Blockschaltbild einer der kombinierten erfindungsgemäßen Vorrichtungen gemäß FIG. 2.

FIG. 4 einen Straßenausschnitt mit einem ·Fahrzeug und einer Schilderbrücke und mit einer erfindungsgemäßen Vorrichtung gemäß FIG. 3.

FIG. 5 einen vertikalen Schnitt durch das Strahlungsfeld des Radarsensors der erfindungsgemäßen Vorrichtung gemäß FIG. 4.

FIG. 6 ein detaillierteres Blockschaltbild der erfindungsgemäßen Einrichtung zur digitalen Signalverarbeitung der erfindungsgemäßen Vorrichtung gemäß FIG. 3.

FIG. 7 eine vorteilhafte weitere Ausführungsform der erfindungsgemäßen Vorrichtung gemäß FIG. 3, bei der zusätzlich Informationen über die Bewegungsrichtung der überwachten Objekte übertragen und ausgewertet werden.

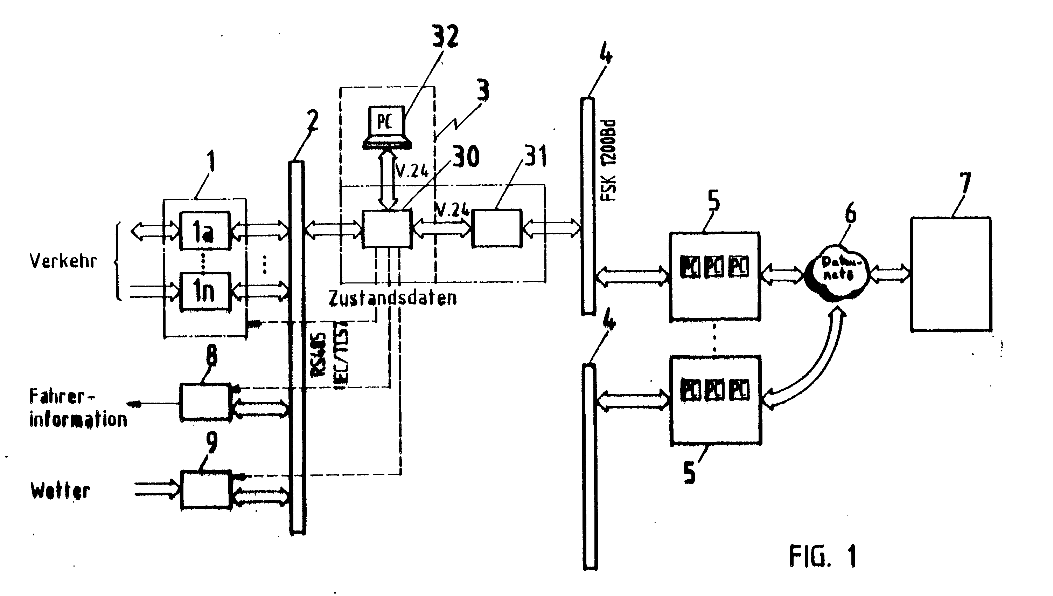

Das überregionale System zur Überwachung bzw. Steuerung des Verkehrsflusses, beispielsweise auf Autobahnen in FIG. 1, enthält eine Reihe von Vorrichtungen 1, die auf ausgewählten Punkten des Autobahnnetzes (beispielsweise im Bereich von Autobahnkreuzen oder -dreiecken oder im Bereich von Autobahnauf- und -abfahrten) verteilt sind und dort den lokalen Verkehrsfluß überwachen, und zwar vorteilhafterweise für jede Fahrspur gesondert. Hierbei kann es sich um konventionelle Überwachungsvorrichtungen 1n, wie z.B. Induktionsschleifen, oder aber vorteilhafterweise um Vorrichtungen 1a gemäß der Erfindung handeln, die neben der Überwachungsfunktion im Prinzip auch die Übertragung von Informationen an die Verkehrsteilnehmer übernehmen können.

Die in einem bestimmten örtlichen Teilbereich des Autobahnnetzes stationierten Überwachungsvorrichtungen 1 sind über eine Datenübertragungseinrichtung 2, in dem Beispiel in Form eines Busses (RS 485) mit Protokoll gemäß IEC/TC57, mit einer für diesen Teilbereich zuständigen lokalen Streckenstation 3 verbunden, die im wesentlichen aus einem Steuermodul 30 besteht, das beispielsweise über eine V.24-Schnittstelle mit einem Modem 31 verbunden ist und an das zu Konfigurations- oder Testzwecke z.B. über eine weitere V.24-Schnittstelle ein Computer (z.B. ein Personalcomputer) bzw. Terminal 32 anschließbar ist.

An die Datenübertragungseinrichtung 2 können weiterhin Wechsel-Verkehrszeichen 8 angeschlossen sein, die z.B. aufgrund der von den Vorrichtungen 1 erfaßten und ausgewerteten Verkehrsinformationen von der zuständigen lokalen Streckenstation 3 über die Datenübertragungseinrichtung 2 die der Verkehrssituation angepaßten amtlichen Verkehrszeichen und/oder Informationen für die Verkehrsteilnehmer anzeigen. Weiterhin können an diese Datenübertragungseinrichtung 2 weitere Sensoren 9 angeschlossen sein, die die meteorologischen Daten für diesen Teilbereich des Autobahnnetzes erfassen und der Streckenstation 3 weitermelden, wie z.B. Angaben über die Sichtweite, Temperatur, Wind, Niederschlag, Schnee, Glatteis, Nässe usw.

Die Streckenstationen 3 der einzelnen Teilbereiche des Autobahnnetzes sind in der nächsthöheren Stufe über eine weitere Datenübertragungseinrichtung 4, z.B. über das bereits installierte Autobahn-Telefonnotrufnetz, mit regionalen Unterzentralen 5 verbunden, die ihrerseits in der nächsthöheren Stufe über eine weitere Datenübertragungseinrichtung, z.B. das öffentliche Telefonnetz, mit einer Zentrale 7 verbunden ist.

Durch diese hierachische Gliederung in mehrere Stufen ist sichergestellt, daß bei Ausfall einzelner Komponenten oder Übertragungsleitungen des Systems die anderen Komponenten ungestört oder nur mit geringen Beeinträchtigungen weiterarbeiten können.

In einer ersten Ausbaustufe wird mit einem solchen überregionalen System zur Überwachung bzw. Steuerung im wesentlichen bezweckt:
- den Verkehrsfluß (Durchschnittsgeschwindigkeit, Zahl und Art der Fahrzeuge) und die meteorologischen Verhältnisse (Sichtweite, Temperatur, Wind, Niederschlag/Schnee, Glatteis/Nässe usw.) insbesondere an kritischen Punkten des Autobahnnetzes zu überwachen;
- die erfaßten Daten sofort an die zuständige regionale Unterzentrale 5 weiterzuleiten, beispielsweise über das parallel zum Autobahnnetz verlegte Autobahn-Telefonnotrufnetz;
- aufgrund der Auswertung dieser Daten die Wechsel-Verkehrszeichen in den betreffenden Teilbereichen des Autobahnnetzes entsprechend durch die zuständige regionale Unterzentrale anzupassen bzw. über die die Verkehrszeichen erzeugenden Anlagen zusätzliche Hinweise und Informationen für die Verkehrsteilnehmer zu geben, wie z.B. Hinweise auf Verkehrsstaus, Baustellen, Unfälle usw.

Darüber hinaus können die regionalen Unterzentralen aktuelle Verkehrszustandsberichte an die Rundfunkstationen senden, die diese über den Verkehrsrundfunk unverzögert an die Verkehrsteilnehmer weitergeben. In einer weiteren Ausbaustufe könnten diese Informationen über die lokalen Vorrichtungen 1 direkt an die Verkehrsteilnehmer übermittelt werden.

Die Kommunikationsprozeduren zwischen den einzelnen Teilen des Systems und die Protokolle sind dabei zweckmäßigerweise in Übereinstimmung mit der IEC/TC 57 definiert.

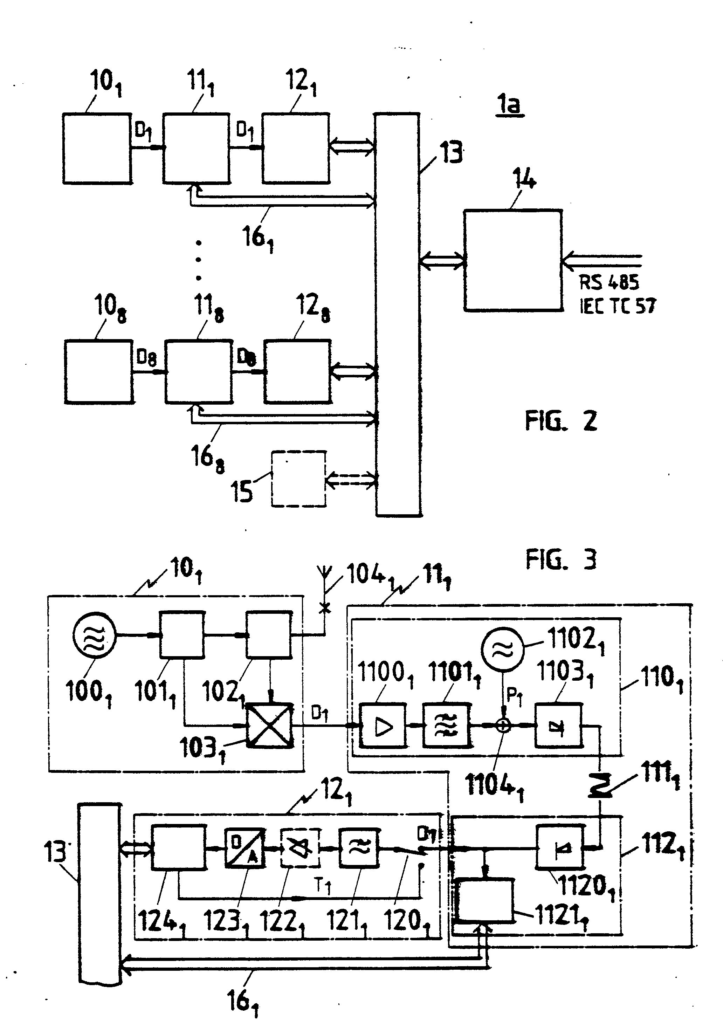

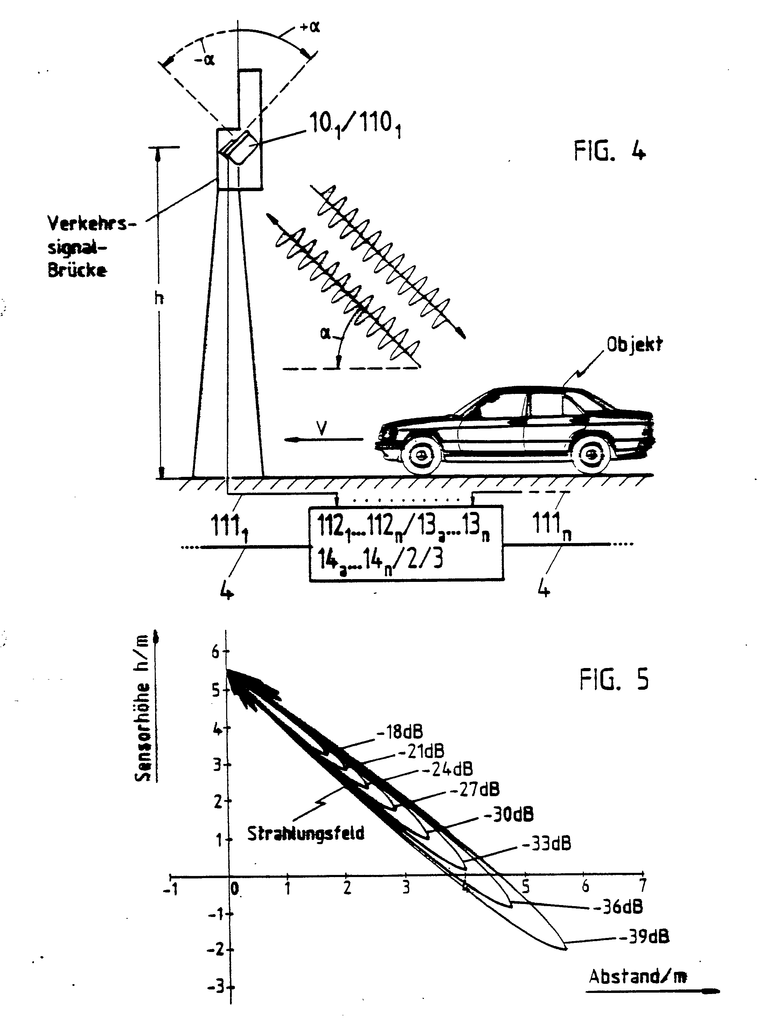

FIG. 2 zeigt eine erfindungsgemäße Vorrichtung 1a zur lokalen Überwachung des Verkehrsflusses. Sie besteht aus mehreren erfindungsgemäßen Einzelvorrichtungen $10_1$, $11_1$, $12_1$ -$10_8$, $11_8$, $12_8$ jeweils zum Durchführen des erfindungsgemäßen Verfahrens, wobei die Indizes 1 und 8 beispielhaft acht solche Einzelvorrichtungen andeuten sollen. Eine solche Einzelvorrichtung überwacht jeweils eine Fahrspur und besteht jeweils aus
- einem Radarsensor $10_1$ bzw. $10_8$, der in einer Höhe h beispielsweise an einem Mast an der Seite der Autobahn oder an einer Verkehrsschilderbrücke angebracht sein kann und unter einem bestimmten vertikalen Anstellwinkel $\alpha$ herab auf die Verkehrsteilnehmer gerichtet ist (vg. auch FIG. 4);
- einer Übertragungseinrichtung $11_1$ bzw. $11_8$, die einerseits die Stromversorgungsleitungen für den Radarsensor $10_1$ bzw. $10_8$ führt und andererseits die Ausgangssignale $D_1$ bzw. $D_8$ des Radarsensors $10_1$ bzw. $10_8$ an eine Auswerteeinheit $12_1$ bzw. $12_8$ überträgt, wobei die Auswerteeinheit $12_1$ bzw. $12_8$ die Ausgangssignale $D_1$ bzw. $D_8$ des Radarsensors $10_1$ bzw. $10_8$ auswertet und daraus die aktuellen Verkehrsdaten bestimmt (Geschwindigkeit, Durchschnittsgeschwindigkeit, Fahrzeuglänge, Fahrzeugabstand, Fahrzeugart usw.).

In dem Ausführungsbeispiel sind acht solcher Einzelvorrichtungen 10 - $12_{1-8}$ ausgangsseitig über einen gemeinsamen Standard-ECB-Bus 13 (zusätzlich sind auch die jeweiligen Übertragungseinrichtungen $11_1$ - $11_8$ direkt an diesen Bus 13 angeschlossen) mit einem Datenkollektor 14, beispielsweise einem Mikrocomputer, verbunden, dessen Aufgabe neben der Datenspeicherung vor allem in der Steuerung bzw. Überwachung der acht Einzelvorrichtungen (Datenüberwachung, Fehlerkontrolle usw.) und in der Kommunikation mit dem Steuermodul (30 in FIG. 1) der zugehörigen Streckenstation (3 in FIG. 1) besteht. Außerdem kommen die regionalen Unterzentralen (5 in FIG. 1) oder die Zentrale (7 in FIG. 1) über die zuständige Steuereinrichtung (3 in FIG. 1) Befehle, neue Parameterwerte usw. an den Datenkollektor 14 senden, der diese Informationen analysiert und sie entsprechend an eine, mehrere oder alle Einzelvorrichtungen $10_1$, $11_1$, $12_1$ ... $10_8$, $11_8$, $12_8$ weiterleitet.

In einer weiteren Ausführungsstufe können darüber hinaus lokal oder zentral erzeugte Informationen über die erfindungsgemäßen Einzelvorrichtungen $10_1$ ... $12_8$ direkt an die Verkehrsteilnehmer weitergeleitet werden (beispielsweise Informationen über Verkehrsstaus, Umleitungsmöglichkeiten, Gefahrenstellen, Baustellen usw.).

Außerdem kann an den ECB-Bus 13 zusätzlicher Speicher 15 angeschlossen werden, in dem die in den Einzelvorrichtungen $10_1$ ... $12_8$ erzeugten Daten gespeichert werden können. Dies ist besonders dann von Vorteil, wenn eine solche Vorrichtung 1a nicht als Teil eines überregionalen Systems, sondern als unabhängiges "autarkes" mobiles Einzelsystem eingesetzt wird, beispielsweise zur Verkehrszählung an einer innerstädtischen Straßenkreuzung.

FIG. 3 zeigt als Blockschaltbild den prinzipiellen Aufbau einer vorteilhaften erfindungsgemäßen Einzelvorrichtung $10_1$ ... $12_1$ gemäß FIG. 2 im Detail.

Als Radarsensor 10 ist ein Millimeterwellen-Sende/Empfangsgerät vorgesehen, das aus einem lokalen Oszillator $100_1$, einem Kopplungsnetzwerk $101_1$, einem Duplexer $102_1$, einem Mischer $103_1$ sowie einer Sende/Empfangsantenne $104_1$ besteht.

Das Gerät sendet über die Antenne $104_1$ ein kontinuierliches unmoduliertes sinusförmiges Millimeterwellensignal des lokalen Oszillators $100_1$ mit der Frequenz $f_0$ = 61,25 GHz aus und empfängt über die Antenne $104_1$ einen Teil der von den den Radarstrahl passierenden Fahrzeugen reflektierten Signale, die wegen des Dopplereffekts eine Frequenzverschiebung erfahren haben. Durch direktes Mischen eines solchen Signals mit einem über das Kopplungsnetzwerk $101_1$ ausgekoppelten Teils des ausgesandten Signals wird in dem Mischer ein erstes Ausgangssignal $D_1$ mit der Differenzfrequenz, ein sog. Dopplerecho oder Dopplersignal, erzeugt.

Die Frequenz $f_0$ = 61,25 HGz ermöglicht es, auf besonders vorteilhafte Weise eine hohe Absorption durch die Atmosphäre (20 dB/km) mit der Komptaktheit von Millimeterwellenbauteilen zu kombinieren. So paßt der gesamte Radarsensor $10_1$ zusammen mit einem Teil $110_1$ der Übertragungseinrichtung in ein würfelförmiges Gehäuse mit der Kantenlänge von etwa 15 cm.

Sender und Empfänger sind unterschiedlich polarisiert, um Cluttereffekte infolge Regen oder Schnee zu verringern. Die Sendeleistung beträgt weniger als 10 mW. Die Strahlcharakteristik hat vorzugsweise einen horizontalen bzw. vertikalen Öffnungswinkel von 3° bzw. 13° (vgl. hierzu FIG. 5, in der ein vertikaler Schnitt durch das Strahlungsfeld des Sensors gezeigt ist).

Wie FIG. 4 zeigt, ist der Sensor beispielsweise an einer Verkehrssignalbrücke in einer Höhe h (beispielsweise h ≈ 5,5m) über der zu überwachenden Fahrspur angeordnet und ist mit seinem Strahlungsfeld unter einem Anstellwinkel $\alpha$ (gemessen zur Vertikalen) auf die zugehörige Fahrspur gerichtet. Ein in FIG. 4 als "Objekt" bezeichnetes Fahrzeug mit der Geschwindigkeit v reflektiert einen Teil der vom Sensor $10_1$ ausgesandten Strahlung in Richtung des Sensors. Im Idealfall ergibt sich die Frequenz f des Dopplerechos zu

$$ f = \frac{f_0 \cdot 2v \cdot \cos\alpha}{c} \qquad (1) $$

wobei c für die Lichtgeschwindigkeit steht. Der Anstellwinkel $\alpha$ entspricht dabei nach den Gesetzen der Geometrie dem Winkel zwischen Radarstrahl und dem Geschwindigkeitsvektor v des den Radarstrahl passierenden Fahrzeugs.

In der Praxis ergeben sich allerdings Abweichungen von dem hier geschilderten Idealfall, z.B. in Form meßbarer Frequenzverschiebungen, die nicht auf dem Doplereffekt beruhen, oder Amplitudenfluktuationen bis hin zur vollständigen Absorption des Signals durch die den Radarstrahl passierenden Fahrzeuge. Verursacht werden diese Effekte vor allem durch Überlappung von reflektierten Signalen, die an unterschiedlichen Stellen des Fahrzeugs mit unterschiedlicher Geometrie bzw. Reflexionscharakteristik reflektiert worden sind, bzw. durch die endliche Ausdehung des Radarstrahlungsfeldes in Bewegungsrichtung der Fahrzeuge.

Bei der Auswahl des Anstellwinkels $\alpha$ müssen zwei Effekte beachtet werden, die nicht gleichzeitig optimiert werden können: einen hohe Genauigkeit für die Messung der Fahrzeuglänge und eine zuverlässige Trennung aufeinanderfolgender Fahrzeuge wird mit großen Anstellwinkeln $\alpha$ (Grenzfall: Strahlungsfeld ist senkrecht nach unten gerichtet) erreicht. Jedoch ist die Breite des Frequenzspektrums eines Dopplerechos i.a. umso großer (und damit die Ungenauigkeit der Frequenzmessung), je größer $\alpha$ ist. Dies hat nach Gleichung (1) zur Folge, daß die Genauigkeit bei der Bestimmung der Geschwindigkeit des Fahrzeugs umso geringer ist, je größer der Anstellewinkel $\alpha$ gewählt ist oder, mit anderen Worten, je genauer die Messung der Fahrzeuglänge erfolgt.

Eine Optimierung dieser beiden gegenläufigen Effekte führt zu einem Anstellwinkel von etwa 53°. Hierbei kann das Strahlungsfeld des Radarsensors $10_1$ entweder - wie in FIG. 4 dargestellt - auf die Vorderseite der Fahrzeuge gerichtet sein (positiver $\alpha$-Wert) oder auf die Rückseite der Fahrzeuge (negativer $\alpha$-Wert (gestrichelt in FIG. 4)). Aufgrund unterschiedlicher Abschattungsgrade durch die Fahrzeuge ergeben sich für diese beiden Ausrichtungsmöglichkeiten unterschiedliche Fehler in der Längenmessung der Fahrzeuge.

Die Übertragseinheit $11_1$ in FIG. 3 besteht aus einem sensorseitigen Teil $110_1$, der in FIG. 4 zusammen

mit dem Radarsensor $10_1$ in einem gemeinsamen Gehäuse untergebracht ist, einem Übertragungskabel $111_1$, dessen Länge sich bis zu 1 -2km bemessen kann und das den sensorseitigen Teil $110_1$ der Übertragungseinheit $11_1$ mit einem auswerteeinheitsseitigen Teil $112_1$ der Übertragungseinheit $11_1$ verbindet (vgl. auch FIG. 4). Hierdurch ist es z.B. möglich, auch ausgedehntere Teilbereiche des Autobahnnetzes, wie z.B. Autobahnkreuze oder -dreiecke oder großräumige Auf- und Abfahrten, bei denen jeweils mehr als acht Fahrspuren überwacht werden müssen und die insgesamt somit den Einsatz von mehr als acht erfindungsgemäßen Vorrichtungen erfordern, mit einer einzigen lokalen Streckenstation (3 in FIG. 1 und 4) zu überwachen. Vorzugsweise wird über die Übertragungseinheit $11_1$ auch die zum Betrieb des Radarsensors $10_1$ erforderliche Betriebsgleichspannung (typ. + 24V) von der lokalen Steuerstation geliefert.

Um bei der Übertragung des Dopplerechos Dämpfungs-, Rausch-und/oder Netzbrumm-Einflüsse zu minimieren, wird das zu übertragende Dopplerecho im sensorseitigen Teil $110_1$, der Übertragungseinheit mit einem Modulator $1103_1$ frequenzmoduliert und nach der Übertragung im auswerteeinheitsseitigen Teil $112_1$ mit Hilfe eines Demodulators $1120_1$ demoduliert.

Darüber hinaus wird in einer bevorzugten Ausführungsform in dem sensorseitigen Teil $110_1$ ein Pilotsignal $P_1$ z.B. der Frequenz f = 16 kHz den Dopplerechos $D_1$ hinzuaddiert und mitübertragen. In dem auswerteeinheitsseitigen Teil $112_1$ der Übertragungseinrichtung $11_1$ befindet sich entsprechend eine Auswerteschaltung $1121_1$, die die korrekte Übertragung des Pilotsignals $P_1$ überprüft und im Falle eines Fehlers diesen über einen direkten Anschluß $16_1$ an den zugehörigen ECB-Bus 13 dem Datenkollektor 14 meldet. Vorzugsweise wird das Pilotsignal $P_1$ und den vom Sensor $10_1$ erzeugten Rauschsignalpegel angekoppelt, so daß bei Ausfall des Sensors $10_1$ und dem damit verbundenen fehlenden Rauschsignal auch kein Pilotsignal $P_1$ übertragen wird und die Auswerteschaltung $1121_1$ sofort eine Fehlermeldung an den Datenkollektor 14 senden kann.

In einer bevorzugten Ausführungsform der Erfindung sind jeweils die auswerteeinheitsseitigen Teile von vier der acht zu einem Datenkollektor 14 gehörenden Übertragungseinrichtungen $11_1$ ... $11_8$ auf einer Karte zusammengefaßt.

Die Auswerteeinheit $12_1$ in FIG. 3 schließlich besteht aus einem Antialiasing-Tiefpaßfilter $121_1$ zur Vermeidung von spektralen Überfaltungen, einem Analog/Digital-Wandler $123_1$ und einer Einrichtung zur digitalen Signalverarbeitung $124_1$. In bevorzugten Ausführungsformen ist dem Analog/Digital-Wandler $123_1$ zusätzlich ein Verstärker $122_1$ mit einstellbarem Verstärkungsfaktor vorgeschaltet, dessen Verstärkungsfaktor so eingestellt wird, daß trotz unterschiedlicher Anbringungshöhen der Radarsensoren $10_1$ ... $10_8$ die Dopplersignale auf eine Standardhöhe normalisiert werden können.

Weiterhin ist dem Antialiasing-Tiefpaßfilter $121_1$ zusätzlich ein Schalter $120_1$ vorgeschaltet, der es ermöglicht, anstelle der Dopplerechos $D_1$ ein Testsignal $T_1$ in die Auswerteeinheit $12_1$ einzuspeisen, das vorteilhaft in der Einrichtung zur digitalen Signalverarbeitung $124_1$ erzeugt wird, und mit dem die Auswerteeinheit $12_1$ einem Selbsttest unterzogen werden kann. Der Ausgang der Einrichtung zur digitalen Signalverarbeitung $124_1$ ist mit dem ECB-Standardbus verbunden.

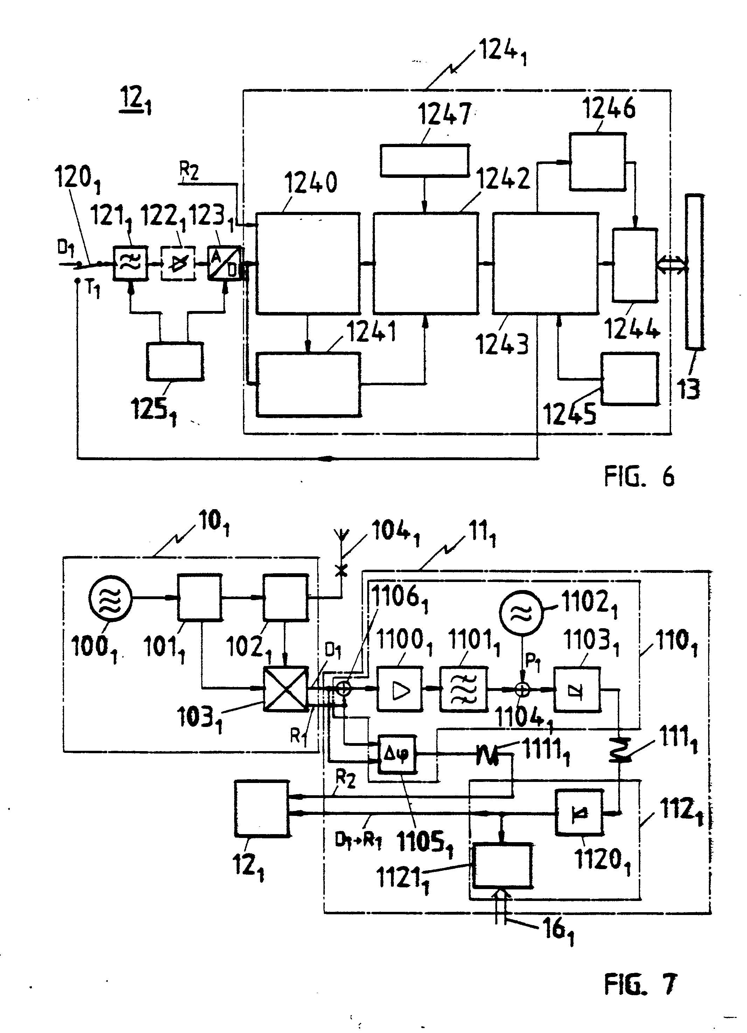

Die vorteilhafte Ausführungsform der Auswerteeinheit $12_1$ in FIG. 6 schließlich enthält neben dem Umschalter $120_1$ zur Einspeisung des Testsignals $T_1$ anstelle des Dopplerechos $D_1$ das Antialiasing-Tiefpaßfilter $121_1$, vorzugsweise in Form eines Digitalfilters (z.B. Schalter/Kondensatorfilter), sowie den Verstärker $122_1$ mit einstellbarem Verstärkungsgrad, den Analog/Digitalwandler $123_1$ und die Einrichtung zur digitalen Signalverarbeitung $124_1$. Die Besonderheit dieser Anordnung liegt zum einen darin, daß über einen Taktgeber $125_1$ die Grenzfrequenz des Tiefpaßfilters $121_1$ und die Abtastrate des Analog/Digitalwandlers $123_1$ an den vorherrschenden Geschwindigkeitsbereich angepaßt werden kann, und zum anderen darin, daß ein zusätzliches Signal $R_2$ in die Einrichtung zur digitalen Signalverarbeitung $124_1$ eingespeist wird, das aus einem weiteren Dopplerecho $R_1$ abgeleitet wird und als Information die Bewegungsrichtung der Fahrzeuge enthält.

Die Einrichtung $124_1$ zur digitalen Signalverarbeitung besteht aus vier miteinander vernetzten, digitalen Signalprozessoren 1240 - 1243 (z.B. NEC 7720), die parallel arbeiten, sowie einem Adapter 1244 für den Anschluß der Signalprozes soren 1240 - 1243 an den ECB-Standardbus 13, einem Taktgeber 1245 zur Erzeugung eines Testsignals, einem Alarmgebar 1246 zum melden von Fehlern z.B. an eine Leuchtdiode auf der Frontplatte der Einrichtung zur digitalen Signalverarbeitung und/oder an den Datenkollektor (14 in FIG. 2) und eine Schaltung 1247 zur Kompensation der Abweichung des tatsächlich eingestellten Anstellwinkels $\alpha$ von dem optimalen Anstellwinkel von etwa $53^{\circ}$.

Die erfindungsgemäße Vorrichtung in FIG. 7 unterscheidet sich von der erfindungsgemäßen Vorrichtung in FIG. 3 dadurch, daß

1) der Mischer im Radarsensor zwei Dopplersignale $D_1$ und $R_1$ liefert, deren Phasenlage zueinander Auskunft gibt über die Fahrt- bzw. Bewegungsrichtung des Objekts. Dazu wird für jede Schwingung des Dopplersignals $D_1$ in einem Phasenvergleicher $1105_1$ ein Phasenvergleich mit $R_1$ durchgeführt und das Ergebnis ("voreilend" bzw. "nacheilend") als 1-Bit-Signal codiert und über eine zusätzliche Ader $1111_1$ im Übertragungskabel $111_1$ zu der Auswerteeinheit $12_1$ übermittelt;

2) das zu übertragende und auszuwertende Dopplersignal durch Summation aus den beiden phasenverschobenen Dopplersignalen $D_1$ und $R_1$ gewonnen wird ($D_1 + R_1$).

Das erfindungsgemäße Verfahren läuft wie folgt ab: Das im Radarsensor $10_1$ erzeugte (analoge) Dopplerecho wird in dem sensorseitigen Teil der Übertragungseinheit $110_1$ zunächst in einem Verstärker $1100_1$ verstärkt, in einem Bandpaßfilter $1101_1$ gefiltert, in eine Addierer $1104_1$ mit dem Pilotsignal $P_1$ versehen und im Modulator $1103_1$ frequenzmoduliert. Nach der Übertragung wird das frequenzmodulierte Signal demoduliert und im Tiefpaßfilter $121_1$ von den übrigen Signalen (z.B. dem Pilotsignal $P_1$) separiert bzw. nach Verstärkung im Verstärker $122_1$ im Analog/Digitalwandler $123_1$ digitalisiert und in die Einrichtung zur digitalen Signalverarbeitung $124_1$ eingespeist.

Erfindungsgemäß wird in dieser Einrichtung $124_1$ aus diesen digitalisierten Dopplerechos $D_1$ das Frequenzspektrum gebildet, anschließend in diesem Spektrum die Frequenz mit maximaler Amplitude bestimmt und aus dieser Frequenz unter Zuhilfenahme der Gleichung (1) die Geschwindigkeit des Fahrzeugs abgeleitet.

In der Praxis ergeben sich mit $f_0$ = 61,25 GHz, c = 300 000 km/h und Geschwindigkeit v < 207 km/h ein Frequenzbereich der Dopplerechos $D_1$ von 0 bis etwa 14,25 kHz, was nach dem Abtasttheorem eine Mindest-Abtastrate des Analog/Digital-Wandlers $123_1$ von 28,5 kHz erfordert (vorzugsweise 32 kHz).

Die Dynamik des Dopplerechos hängt von der Entfernung zwischen Radarsensor und dem reflektierenden Gegenstand ab, also dem Fahrzeug, und vom effektiven radarempfindlichen Wirkungsquerschnitt der zu registrierenden Fahrzeuge. Typisch kann ein Dynamikbereich von ca. 60 dB erwartet werden.

In bevorzugten Ausbildungen des erfindungsgemäßen Verfahrens wird das Frequenzspektrum entweder durch Autokorrelation des Dopplerechos $D_1$ mit anschließender Spektraltransformation oder durch Relaiskorrelation des Dopplerechos $D_1$ mit anschließender Spektraltransformation und vorteilhaft durch direkte Spektraltransformation, vorzugsweise über die Diskrete-Fourier-Transformation (DFT), insbesondere unter Anwendung des Fast-Fourier-Transformationsverfahrens (FFT), gebildet.

Im Gegensatz zu herkömmlichen Verfahren, wie z.B. dem Zählen von Nulldurchgängen beim Dopplerecho oder dem Messen der Periodendauer über mehrere Schwingungen hinweg, ist durch die hier verwendeten Verfahren sichergestellt, daß Signalbereiche mit relativ kleinem Signal/Rausch-Verhältnis nicht das Meßergebnis verschlechtern, da hier eine lineare Frequenztransformation vorgenommen wird und die tatsächliche Dopplerfrequenz diejenige Frequenz mit der maximalen Amplitude im Spektrum ist, woraus mit Gleichung (1) die Geschwindigkeit des Fahrzeugs abgeleitet werden kann.

Vorzugsweise wird die Fourieranalyse mit N = 128 Stützpunkten durchgeführt, was zu einer Intervallbreite im Geschwindigkeitsbereich von etwa 3,6 km/h führt, also zu einer Genauigkeit in der Geschwindigkeitsbestimmung von etwa ± 1,8 km/h. Für den Fall, daß der tatsächliche Winkel $\alpha$ des installierten Radarsensors von dem optimalen Winkel $\alpha = 53°$ abweicht, muß die berechnete Geschwindigkeit entsprechend korrigiert werden (mit ca. 2,3 % für eine Abweichung von ca. 1°). Um dies berücksichtigen zu können, wird die Abweichung vorteilhafterweise nach der Installation des Sensors gemessen und durch entsprechende Einstellung der Winkelkompensationsschaltung 1247 in der Einrichtung $124_1$ zur digitalen Signalverarbeitung kompensiert.

In einer vorteilhaften Ausbildung des Verfahrens wird zur Bestimmung der Bewegungsrichtung der Fahrzeuge ein zusätzliches Dopplerecho erzeugt, das gegenüber dem ersten Dopplerecho phasenverschoben ist. Für jede Periode der beiden Signale wird die Phasenlage der beiden Signale verglichen und die für jede Periode ermittelte Phasenlage anschließend jeweils mit einem Bit codiert. In der Einrichtung $124_1$ zur digitalen Signalverarbeitung wird anschließend aus der Folge der einzelnen Bits in dem Signalprozessor 1240 die Bewegungsrichtung der Fahrzeuge abgeleitet.

Mit dem erfindungsgemäßen Verfahren werden außerdem der Anfang und das Ende der einzelnen Dopplerechos bestimmt, u.a. um aus der Geschwindigkeit des Fahrzeugs und aus der Dauer des damit verbundenen Dopplerechos die Länge des Fahrzeugs abzuleiten.

Die Signaldauermessung basiert auf der Messung der Einhüllenden des Dopplersignals, wobei in einem zeitlich sich verschiebenden Fenster die anfallende Energie des Dopplerechos bestimmt wird und diese Energie jeweils mit einem ersten und zweiten Schwellenwert verglichen wird. Überschreitet die Energie zu einem Zeitpunkt erstmalig den ersten Schwellenwert, so wird damit der Beginn des Dopplerechos festgelegt bzw. definiert; unterschreitet die Energie zu einem späteren Zeitpunkt den zweiten Schwellenwert, so wird damit das Ende des Dopplerechos festgelegt bzw. definiert. Zwischenzeitliche kurzzeitige Unterschreitungen des zweiten Schwellenwertes infolge ungünstiger Reflexionsbedingungen beim Fahrzeug (kein Reflexionsanteil in Richtung Sensor; vollständige Absorption der Radarstrahlung durch den Gegenstand usw.) werden in einer vorteilhaften Fortbildung des Verfahrens nicht als Signalende gewertet. Darüber hinaus kann die Höhe der Schwellenwerte an den jeweils vorherrschenden Rauschpegel angepaßt werden (beispielsweise Erhöhung der Schwellenwerte bei starkem Regen oder bei Schneefall), um die Zahl der Fehldetektionen zu verringern. Auch können die beiden Schwellenwerte in ihrer Höhe unterschiedlich gewählt werden.

Wie weiter oben bereits erwähnt, ist es möglich, aus Geschwindigkeit des Fahrzeugs und Signaldauer des damit verbundenen Dopplerechos gemäß der Gleichung

$$L = v \bullet T \quad (2)$$

die Länge des Fahrzeugs zu bestimmen, wobei L die Länge, v die Geschwindigkeit des Fahrzeugs und T die Signaldauer des Dopplerechos $D_1$ ist. Dieses Ergebnis berücksichtigt allerdings nicht die endliche Ausdehnung des Radarflecks in Bewegungsrichtung des Fahrzeugs. Der tatsächlich vorliegende Radarfleck hängt u.a. von der Höhe des Fahrzeugs und von der Höhe der Schwellenwerte ab. Statistische Messungen an einer Vielzahl von Fahrzeugen führten zu einem Mittelwert von 80 cm, der sich im wesentlichen mit dem theoretischen Wert gemäß FIG. 4 deckt. Diese Radarfleckausdehnung (experimentell und/oder theoretisch bestimmt) wird in bevorzugten Weiterbildung des Verfahrens bei der Bestimmung der Länge L und der Signaldauer T berücksichtigt.

Aufgrund der bisher bestimmten Werte (v, T, L) und weiterer Informationen (momentaner Rauschpegel, Signalenergie, stati stische Parameter zum bisherigen Signalverlauf) kann anschließend eine Klassifikation der Signale durchgeführt werden, um Fehldetektionen, z.B. infolge von starken Regen oder Schneefall, auf ein Mindestmaß zu reduzieren.

Um in einem weiteren Schritt eine Unterscheidung zwischen LKW und PKW auf der Basis der Fahrzeuglänge und/oder Signal-amplitude treffen zu können, ist es von Vorteil, die unterschiedlichen Installations- oder Anbringungshöhen der einzelnen Radarsensoren mit Hilfe der Verstärker $122_1$ in den Auswerteeinheiten 12 zu kompensieren und die Berechnungen auf der Basis einer normalisierten Installationshöhe durchzuführen.

Der Schräge Einfall des Radarstrahlungsfeldes führt zu einem unerwünschten Abschattungseffekt bei den Fahrzeugen (insbesondere bei LKWs), der die tatsächliche Länge des Fahrzeugs verfälscht. Dieser Effekt kann in den Berechnungen durch einen Korrekturwert kompensiert werden, der zweckmäßigerweise empirisch aus Messungen an einer möglichst großen Zahl von Fahrzeugen statistisch ermittelt wird und der vorteilhaft mit dem Korrekturwert für die endliche Ausdehnung des Radarflecks zu einem gemeinsamen Korrekturwert zusammengefaßt wird.

Zur Verbesserung der Signalauswertung können beim Fast-Fourier- Transformationsverfahren die Eingangsdaten zusätzlich mit einer Fensterfunktion gewichtet werden, beispielsweise um die im mittleren Bereich des Fensters liegenden Stützpunkte gegenüber den am Rand liegenden Stützpunkten bei der Berechnung stärker zu berücksichtigen ("Windowing").

Experimentelle Ergebnisse an Autobahnen haben ergeben, daß die Standardabweichung des Fehlers berechneter Fahrzeuglängen etwa 45 cm und die des Fehlers bei den berechneten Fahrzeuggeschwindigkeiten für Geschwindigkeiten um 100 km/h etwa 1,7 km/h beträgt.

Im einzelnen nehmen die vier Signalprozessoren 1240 - 1243 in FIG. 6 folgende Aufgaben wahr:

a) Signalprozessor 1240:

- Auswertung des Rauschpegels
- Messung der Einhüllenden des Dopplerechos
- Bestimmung der Bewegungsrichtung des Fahrzeugs

b) Signalprozessor 1241:

- Fast-Fourier-Transformation (FFT) des Dopplerechos
- "Windowing"

c) Signalprozessor 1242:

- spektrale Mittelung der durch die FFT erhaltenen Frequenzspektren

- Bestimmung der Fahrzeuggeschwindigkeit
- Bestimmung der Fahrzeuglänge
- Unterdrückung von Clutter infolge Regen und/oder Schnee
- Kompensation der Abweichung des eingestellten Anstellwinkels $\alpha$ vom optimalen Anstellwinkel ($\alpha = 53°$)

d) Signalprozessor 1243:

- Fahrzeugklassifizierung
- mittlere Geschwindigkeit der Fahrzeuge
- Testfunktionsgewinnung mit Auswertung des Selbsttests der Einrichtung zur digitalen Signalverarbeitung.

Die Verwendung eines Radarsensors beinhaltet folgende Vorteile gegenüber konventionellen Lösungen (Induktionsschleifen etc.):

1) Installation ohne Arbeiten am Fahrbahnbelag (vgl. Schleifen) möglich;

2) höhere Lebensdauer, da keinerlei Abnutzung durch Verkehr;

3) mobile Verkehrsdatenerfassung möglich (Anbringung an Peitschenmasten bzw. Einstrahlung von der Fahrbahnseite usw.);

4) Einsatzmöglichkeit an Baustellen, insbesondere wenn im Zuge der Bauarbeiten die Fahrbahnbeläge zerstört bzw. die Fahrspuren verlegt werden müssen;

5) kein Abgleich im Betrieb ("Einmessen") bzw. keine spätere Nachjustierung erforderlich;

6) Erweiterbarkeit um die Kommunikation zum Fahrzeug.

Aus der vollständig digitalen Realisierung der Dopplersignal-Auswertung ergeben sich folgende Vorteile:

1) sehr hohe Genauigkeit bei der Ermittlung der Fahrzeuggeschwindigkeit;

2) sichere Signalklassifikation durch Einbeziehung von Zeit-, Frequenz- und Amplitudenkriterien;

3) Reproduzierbarkeit der Ergebnisse;

4) keinerlei Justierungsarbeiten infolge Alterung oder Temperaturdrift und somit geringer Wartungsaufwand;

5) Einbeziehung von intelligenter Überwachungs- und Kontrollfunktionen;

6) einfache Anpassung an spezielle Anwendungen durch Modifikation der Abtastrate und Änderung von Auswerte-oder Ausgabeprogrammen; keine Hardware-, ggf. nur Softwareänderungen erforderlich;

7) Möglichkeit zur Übernahme von Steuerparametern oder Entscheidungskriterien der übergeordneten Instanzen in die Auswertung.

Aus der gewählten und beschriebenen Systemkonfiguration, bestehend aus Radarsensor, Übertragungseinheit, digitaler Signalverarbeitungseinheit und Datenkollektor, ergeben sich weiterhin folgende Vorteile:

1) Einsetzbarkeit als autarkes System (mit lokalem Speicher) oder als Teil eines Netzes;

2) große Entfernungen von der Streckenstation zum Anbringungsort des Sensors sind erlaubt, d.h. die Anzahl erforderlicher Streckenstationen mit Netzversorgung kann verringert werden;

3) Überwachung und Kontrolle aller Systemkomponenten vom Datenkollektor aus.

Es versteht sich, daß mit fachmännischem Können und Wissen die Erfindung aus- und weitergebildet sowie an die unterschiedlichen Anwendungen angepaßt werden kann, ohne daß dies hier an dieser Stelle näher erläutert werden müßte.

So ist es z.B. denkbar, mit anderen Signalprozessoren eine ander Signalprozessorkonfiguration zu schaffen, die die gleichen Aufgaben löst wie die in FIG. 6 gezeigte Konfiguration.

Weiterhin ist es möglich, zur Unterdrückung von Clutter und/oder anderen Rauschsignalen in regelmäßigen Abständen Dopplerechos auszuwerten, die nicht aufgrund von Reflexionen an Fahrzeugen erzeugt worden sind, und die erhaltenen Frequenzspektren von den Frequenzspektren zu subtrahieren, die aufgrund von Reflexionen an Fahrzeugen gewonnen worden sind.

Schließlich ist es denkbar, für gängige Fahrzeugtypen den zeitlichen Verlauf der zugehörigen Dopplerechos ("Pattern") in einem zusätzlichen Speicher der Einrichtung $124_1$ zur digitalen Signalverarbeitung zu speichern und die gemessenen zeitlichen Verläufe der Dopplerechos mit diesen gespeicherten Pattern zu vergleichen, um zum einen eine Fahrzeugtypidentifikation zu ermöglichen und um zum anderen die Zahl der Fehldetektionen infolge kurzzeitiger Einbrüche des Dopplerechos innerhalb der Signaldauer weiter zu vermindern.

## Ansprüche

1. Verfahren zur lokalen Verkehrsdatenerfassung und -auswertung mittels einer Vorrichtung, welche einen Radarsensor, eine Übertragungseinrichtung und eine Auswerteeinheit enthält, wobei der Radarsensor und die Auswerteeinheit über die Übertragungseinrichtung miteinander verbunden sind, und wobei der Radarsensor ein kontinuierliches Signal konstanter Frequenz und Amplitude unter einem festen vertikalen Anstellwinkel $\alpha$ aussendet und, sobald ein sich bewegendes Objekt den Radarstrahl mit einer Geschwindigkeitskomponente in Strahlrichtung passiert, einen Teil des am Objekt reflektierten und aufgrund des Dopplereffektes frequenzverschobenen Signals empfängt und durch Mischung der beiden Signale ein erstes Ausgangssignal mit der Differenzfrequenz erzeugt, und wobei die Auswerteeinheit ein vorgeschaltetes Tiefpaßfilter zur Vermeidung von spektralen Überfaltungen, einen Analog/Digital-Wandler und eine nachgeschaltete Einrichtung zur digitalen Signalverarbeitung enthält, dadurch gekennzeichnet, daß in der Einrichtung zur digitalen Signalverarbeitung ($124_1$) das Frequenzspektrum des ersten Ausgangssignals ($D_1$) gebildet wird, anschließend in diesem Spektrum die Frequenz mit maximaler Amplitude bestimmt wird und aus dieser Frequenz die Geschwindigkeit des Objekts abgeleitet wird.

2. Verfahren nach Anspruch 1, dadurch gekennzeichnet, daß das Frequenzspektrum des ersten Ausgangssignals ($D_1$) durch Autokorrelation des Ausgangssignals ($D_1$) und sich daran anschließender Spektraltransformation gebildet wird.

3. Verfahren nach Anspruch 1, dadurch gekennzeichnet, daß das Frequenzspektrum des ersten Ausgangssignals ($D_1$) durch Relaiskorrelation des Ausgangssignals ($D_1$) und sich daran anschließender Spektraltransformation gebildet wird.

4. Verfahren nach Anspruch 1, dadurch gekennzeichnet, daß das Frequenzspektrum des ersten Ausgangssignals ($D_1$) durch direkte Spektraltransformation des Ausgangssignals ($D_1$) gebildet wird.

5. Verfahren nach Anspruch 4, dadurch gekennzeichnet, daß das Frequenzspektrum des ersten Ausgangssignals ($D_1$) über die Diskrete-Fourier-Transformation insbesondere unter Anwendung des Fast-Fourier-Transformationsverfahrens gebildet wird.

6. Verfahren nach einem der Ansprüche 1 bis 5, dadurch gekennzeichnet, daß die Grenzfrequenz des Tiefpaßfilters ($121_1$) und die Abtastrate des Analog/Digital-Wandlers ($123_1$) an den zu erwartenden Geschwindigkeitsbereich der am Verkehr teilnehmenden Objekte angepaßt wird.

7. Verfahren nach einem der Ansprüche 1 bis 6, dadurch gekennzeichnet, daß die Geschwindigkeit des Objekts aus der Frequenz mit maximaler Amplitude unter Einbeziehung des festen Anstellwinkels $\alpha$ des zugehörigen Radarsensors ($10_1$) abgeleitet wird.

8. Verfahren nach einem der Ansprüche 1 bis 7, dadurch gekennzeichnet, daß in dem Radarsensor ($10_1$) ein in seiner Phasenlage von der Bewegungsrichtung des Objekts abhängiges zweites Ausgangssignal ($R_1$) erzeugt wird und ein Vergleich der Phasenlage der beiden Ausgangssignals ($D_1$, $R_1$) für jede Periode der beiden Signale ($D_1$, $R_1$) durchgeführt wird und die für jede Periode ermittelte Phasenlage jeweils mit einem Bit codiert wird, und daß in der Einrichtung zur digitalen Signalverarbeitung ($124_1$) aus der Folge der einzelnen Bits die Bewegungsrichtung des Objekts abgeleitet wird.

9. Verfahren nach einem der Ansprüche 1 bis 8, dadurch gekennzeichnet, daß in der Einrichtung zur digitalen Signalverarbeitung ($124_1$) die in einem zeitlich sich verschiebenden Fenster anfallende Energie des ersten Ausgangssignals ($D_1$) bestimmt wird und diese Energie jeweils mit einem vorgegebenen ersten und zweiten Schwellenwert verglichen wird und daß ein erstmaliges Überschreiten des ersten Schwellenwertes durch die Energie als Beginn des ersten Ausgangssignals ($D_1$) und ein nachfolgendes Unterschreiten des zweiten Schwellenwertes durch die Energie als Ende des ersten Ausgangssignals ($D_1$) festgelegt wird.

10. Verfahren nach Anspruch 9, dadurch gekennzeichnet, daß ein ein- oder mehrmaliges kurzzeitiges Unterschreiten des zweiten Schwellenwertes durch die Energie innerhalb einer vorgegebenen Zeitdauer bei der Festlegung des Endes des ersten Ausgangssignals ($D_1$) nicht berücksichtigt wird.

11. Verfahren nach einem der Ansprüche 9 bis 10, dadurch gekennzeichnet, daß die Höhe der beiden Schwellenwerte an den jeweils vorherrschenden mittleren Rauschpegel angepaßt wird.

12. Verfahren nach einem der Ansprüche 9 bis 11, dadurch gekennzeichnet, daß die beiden Schwellenwerte in ihrer Höhe unterschiedlich gewählt werden.

13. Verfahren nach einem der Ansprüche 9 bis 12, dadurch gekennzeichnet, daß in der Einrichtung zur digitalen Signalverarbeitung ($124_1$) aus dem Produkt aus der Geschwindigkeit des Objekts und der Dauer des ersten Ausgangssignals ($D_1$) die Länge des Objekts bestimmt wird.

14. Verfahren nach Anspruch 13, dadurch gekennzeichnet, daß bei der Bestimmung der Länge des Objekts die endliche Ausdehnung des Radarflecks in Bewegungsrichtung des Objekts berücksichtigt wird.

15. Verfahren nach Anspruch 13, dadurch gekennzeichnet, daß bei der Bestimmung der Länge des Objekts Fehler infolge Abschattung durch einen aufgrund von Messungen an einer Vielzahl von solchen Objekten statistisch ermittelten Korrekturwert kompensiert, zumindest aber verringert werden.

16. Verfahren nach einem der Ansprüche 1 bis 15, dadurch gekennzeichnet, daß zur Verringerung der Zahl der Fehldetektionen infolge Clutters in der Einrichtung zur digitalen Signalverarbeitung ($124_1$) das erste Ausgangssignal ($D_1$) anhand eines vorgegebenen Abfrageschemas auf das Vorhandensein bzw. Nichtvorhandensein objektspezifischer Merkmale überprüft wird und nach der Überprüfung anhand eines Vergleichs der Ergebnisse mit vorgegebenen Werten festgelegt wird, ob es sich bei dem überprüften ersten Ausgangssignal ($D_1$) um ein von einem am Verkehr teilnehmenden Objekt verursachtes Signal handelt oder nicht.

17. Verfahren nach einem der Ansprüche 1 bis 16, dadurch gekennzeichnet, daß in der Einrichtung zur digitalen Signalverarbeitung ($124_1$) eine Klassifizierung der untersuchten Objekte nach Länge des Objekts und/oder Amplitude des ersten Ausgangssignals ($D_1$) vorgenommen wird.

18. Verfahren nach einem der Ansprüche 1 bis 17, dadurch gekennzeichnet, daß in regelmäßigen Abständen ein Testsignal ($T_1$) definierter Frequenz, Amplitude und Dauer erzeugt wird und anstelle des ersten Ausgangssignals ($D_1$) in das Tiefpaßfilter ($121_1$) eingespeist wird und zur Kontrolle der Funktionsfähigkeit der Auswerteeinheit ($12_1$) in der Einrichtung zur digitalen Signalverarbeitung ($124_1$) auf Fehler untersucht wird.

19. Vorrichtung zum Durchführen des Verfahrens nach einem der Ansprüche 1 bis 18, dadurch gekennzeichnet, daß das Tiefpaßfilter ($121_1$) als digitales Filter, insbesondere als Schalter/Kondensator-Filter, ausgebildet ist.

20. Vorrichtung nach Anspruch 19, dadurch gekennzeichnet, daß dem Analog/Digital-Wandler ($123_1$) ein Verstärker mit einstellbarem Verstärkungsfaktor ($122_1$) vorgeschaltet ist und daß der Verstärkungsfaktor in Abhängigkeit von der Anbringungshöhe h des Radarsensors ($10_1$) eingestellt ist.

21. Vorrichtung nach einem der Ansprüche 19 bis 20, dadurch gekennzeichnet, daß in der Einrichtung zur digitalen Signalverarbeitung ($124_1$) eine Schaltung (1247) zur Kompensation einer Abweichung des tatsächlichen Anstellwinkels $\alpha$ des zugehörigen Radarsensors ($10_1$) von einem vorgegebenen $\alpha$-Wert vorgesehen ist.

22. Vorrichtung nach einem der Ansprüche 19 bis 21, dadurch gekennzeichnet, daß in der Einrichtung zur digitalen Signalverarbeitung ($124_1$) ein Taktgeber (1245) zur Generierung des Testsignals ($T_1$) in vorgegebenen Zeitabständen und ein Alarmgeber (1246) zum Melden von festgestellten Fehlern des Testsignals ($T_1$) vorgesehen ist.

23. Vorrichtung nach einem der Ansprüche 19 bis 22, dadurch gekennzeichnet, daß die Vorrichtung ($10_1$, $11_1$, $12_1$) zusammen mit mehreren Vorrichtungen der gleichen Art ($10_8$, $11_8$, $12_8$) ausgangsseitig an einem Standard-Bus (13) angeschlossen ist und daß außerdem ein Datenkollektor (14) an den Bus (13) angeschlossen ist.

24. Vorrichtung nach Anspruch 23, dadurch gekennzeichnet, daß ein Speicher (15) an den Standard-Bus (13) angeschlossen ist.

25. Vorrichtung nach einem der Ansprüche 23 bis 24, dadurch gekennzeichnet, daß der Datenkollektor (14) über einen weiteren Bus (2) an eine Steuerstation (3) für mehrere solche kombinierten Vorrichtungen ($10_1$, $11_1$, $12_1$ - $10_8$, $11_8$, $12_8$; 13; 14) angeschlossen ist.

26. Vorrichtung nach einem der Ansprüche 19 bis 25, dadurch gekennzeichnet, daß die Übertragungseinrichtung ($11_1$) die zum Betrieb des zugehörigen Radarsensors ($10_1$) erforderliche Energie überträgt.

27. Vorrichtung nach einem der Ansprüche 19 bis 25, dadurch gekennzeichnet, daß ein Solarzellenarray die zum Betrieb der einzelnen Vorrichtungen und der zugehörigen Streckenstation erforderliche Energie liefert.

28. Vorrichtung nach einem der Ansprüche 19 bis 27, dadurch gekennzeichnet, daß in den jeweiligen Übertragungseinrichtungen ($11_1$) Übertragungskabel ($111_1$) mit einer Länge bis ca. 1 - 2 km vorgesehen sind.

29. Vorrichtung nach einem der Ansprüche 19 bis 28, dadurch gekennzeichnet, daß der Datenkollektor (14) den zugeordneten Einrichtungen (124) zur digitalen Signalverarbeitung sowohl Parameter für die Auswertung als auch Steuerbefehle, insbesondere RESET-Befehle, übermittelt.

30. Vorrichtung nach einem der Ansprüche 19 bis 29, dadurch gekennzeichnet, daß die Übertragungseinheit ($11_1$) einen auswerteeinheitsseitigen Teil ($112_1$) enthält und daß dieser auswerteeinheitsseitige Teil ($112_1$) zusätzlich direkt an den Standardbus (13) angeschlossen ist.

31. Vorrichtung nach einem der Ansprüche 1 bis 30, gekennzeichnet durch die Anwendung in einem regionalen, nationalen oder multinationalen Verkehrserfassungs- und/oder -leitsystem (2 - 9).

10

32. Vorrichtung nach einem der Ansprüche 1 bis 30, gekennzeichnet durch die Anwendung in einem autonomen, lokalen Verkehrserfassungs- und/oder -leitsystem.

FIG. 1

EP 0 335 009 A2

FIG. 2

FIG. 3

EP 0 335 009 A2

FIG. 4

$+\alpha$

$-\alpha$

$10_1 / 110_1$

Verkehrssignal-
Brücke

h

$\alpha$

Objekt

V

$111_1$    $112_1 ... 112_n / 13_a ... 13_n$    $111_n$
          $14_a ... 14_n / 2 / 3$

4                                            4

FIG. 5

Sensorhöhe h/m

6
5
4
3
2
1

-18dB
-21dB
-24dB
-27dB
-30dB
-33dB

Strahlungsfeld

-1  0   1   2   3   4   5   6   7

-1
-2
-3

-36dB

-39dB

Abstand/m

FIG. 6

FIG. 7